# EUROPÄISCHE PATENTSCHRIFT

(11) **EP 4 318 432 B1**
(45) Veröffentlichungstag und Bekanntmachung des Hinweises auf die Patenterteilung: **11.06.2025**
(21) Anmeldenummer: 23189395.9
(22) Anmeldetag: 03.08.2023
(51) Int. Cl.: G08G 1/00, G08G 1/005, G01S 5/14, G01S 5/02, G06Q 10/063, G06Q 30/0645, G06Q 50/06, G06Q 50/43

(54) **FLOTTENMANAGEMENTSYSTEM FÜR ELEKTROKLEINSTFAHRZEUGE**
FLEET MANAGEMENT SYSTEM FOR SMALL ELECTRIC VEHICLES
SYSTÈME DE GESTION DE FLOTTE POUR VÉHICULES ÉLECTRIQUES DE PETITE TAILLE

(30) Priorität: 04.08.2022 EP 22000197
(43) Veröffentlichungstag der Anmeldung: 07.02.2024
(73) Patentinhaber: RTB GmbH & Co. KG, 33175 Bad Lippspringe (DE)
(72) Erfinder: Broer, Rudolf, 33175 Bad Lippspringe (DE)
(74) Vertreter: Schaumburg und Partner Patentanwälte mbB

(56) Entgegenhaltungen:
- EP-A1- 3 401 196
- US-A1- 2017 039 668
- US-A1- 2020 279 485

## Beschreibung

Die vorliegende Erfindung betrifft ein Flottenmanagementsystem zum Starten und Beenden von Entleihvorgängen bei Elektrokleinstfahrzeugen.

Als Elektrokleinstfahrzeug (eKF) gelten Fahrzeuge mit elektrischem Antrieb, die also emissionslos sind. In der Regel weisen sie ein geringes Gewicht und kleines Ausmaß auf. Oft sind sie auch falt- und tragbar. Aus diesem Grund lassen sie sich leicht mitnehmen und sind vor allem in der Stadt gut zum Zurücklegen kürzerer Strecken geeignet. Typische Beispiele für Elektrokleinstfahrzeuge sind Elektroroller (sogenannte E-Scooter), Segways, Hoverboards, Airwheels, E-Skateboards und fahrende Lieferdrohnen sowie E-Fahrräder und E-Drohnen.

Das Abstellen derartiger Elektrokleinstfahrzeuge, insbesondere von geliehenen Elektrorollern, auf Gehwegen, stellt jedoch für alle Fußgänger eine Erschwernis bei der Fortbewegung dar. Für blinde und sehbehinderte Menschen ist dies nicht nur hinderlich, sondern führt zu massiven Orientierungsschwierigkeiten und bringt, aufgrund der nicht rechtzeitigen Erkennbarkeit dieser Hindernisse, ein erhöhtes Unfallrisiko mit sich. Zudem werden Elektrokleinstfahrzeuge wie z. B. Elektroroller sehr oft an gefahrenträchtigen Orten abgestellt, wie z. B. senkrecht zu den Hauswänden in der Nähe von Eingängen von Läden, vor Treppenanlagen, im Umfeld von Stationen des öffentlichen Verkehrs, in der Nähe von Ampelmasten und unmittelbar an Bodenindikatoren, den Bodenleitelementen für blinde und sehbehinderte Personen (weitere Informationen zu Bodenindikatoren können beispielsweise der DIN Norm 32984 entnommen werden).

Elektrokleinstfahrzeuge, insbesondere Elektroroller (auch bekannt als: Elektro-Scooter, E-Tretroller oder Elektro-Tretroller) stehen und liegen oftmals allerorts auf Gehsteigen, Gehwegen oder in Fußgängerbereichen (ruhender Verkehr) und sind dort Stolperfallen für Menschen, die von einer Sehbehinderung bzw. von Blindheit betroffen sind. Durch den Blindenstock werden insbesondere liegende Elektroroller zu spät erfasst, so dass eine blinde oder sehbehinderte Person über den Roller stürzt und sich dabei ggf. verletzt. Der beim Pendeln über dem Boden schräg gehaltene Blindenstock schiebt sich dabei beispielsweise unter die Stützstange des Lenkers und so kommt die haptische Rückmeldung über den Stock erst kurz vor Erreichen des Hindernisses. Weiterhin werden Elektroroller auch auf Treppen zu U-Bahnen oder anderen Verkehrsanlagen abgelegt und entwickeln sich hierdurch zu gefährlichen Stolperfallen.

Von zahlreichen Gruppen von Verkehrsteilnehmern wird daher derzeit ein generelles Abstellverbot von Leih-Elektrorollern auf Flächen im öffentlichen Raum gefordert, die von Fußgängern genutzt werden. Diese Fußgänger fordern weiter, dass die Städte gesonderte Abstellbereiche für Leih-Elektroroller schaffen, die von Fußgängerbereichen getrennt anzuordnen sind. Neben dieser sehr drastischen Maßnahme sind auch technische Lösungen bekannt, bei denen mittels der Unterstützung durch ein globales Navigationssatellitensystem Entleihvorgänge bei Elektrorollern nur in bestimmten Bereichen beendet werden dürfen und in anderen Bereichen eine Beendigung des Entleihvorgangs unmöglich ist. Da die Nutzung massentauglicher Geräte für globale Navigationssatellitensysteme in günstigen Fällen eine Genauigkeit von 5 bis 10 m aufweisen, sind diese Ansätze nicht für eine kleingliedrige Überwachung von Abstellbereichen und Gefahrenbereichen geeignet.

Die Druckschrift US 2020/0279485 A1 offenbart ein Flottenmanagementsystem zum Starten und Beenden von Entleihvorgängen, umfassend ein Elektrokleinstfahrzeug und ein mobiles Endgerät, das dazu eingerichtet ist, einen Entleihvorgang des Elektrokleinstfahrzeuges zu starten und den Entleihvorgang des Elektrokleinstfahrzeuges wieder zu beenden.

Der Erfindung liegt hiervon ausgehend die Aufgabe zugrunde, eine Möglichkeit zu schaffen, mit der das Beenden des Entleihvorgangs bei Elektrokleinstfahrzeugen in räumlicher Hinsicht sehr kleingliedrig überwacht und gesteuert werden kann.

Diese Aufgabe wird durch ein Flottenmanagementsystem zum Beenden von Entleihvorgängen mit den Merkmalen des Anspruchs 1 gelöst. Vorteilhafte Ausgestaltungen dieser Erfindungsaspekte sind in den entsprechenden Unteransprüchen angegeben und werden - neben weiteren Erfindungsaspekten - nachfolgend beschrieben.

Beschrieben wird ein Flottenmanagementsystem zum Starten und Beenden von Entleihvorgängen, umfassend:
- ein Elektrokleinstfahrzeug mit einem Empfänger eines globalen Navigationssatellitensystems;
- ein mobiles Endgerät, das dazu eingerichtet ist, einen Entleihvorgang des Elektrokleinstfahrzeuges zu starten und den Entleihvorgang des Elektrokleinstfahrzeuges wieder zu beenden;
- eine Sicherheitszonenüberwachungseinrichtung, die dazu ausgelegt ist, im Zusammenwirken mit dem Elektrokleinstfahrzeug, eine Gegenwart des Elektrokleinstfahrzeuges im Überwachungsbereich der Sicherheitszonenüberwachungseinrichtung zu detektieren;
- eine Datenverarbeitungseinrichtung, die mit dem Elektrokleinstfahrzeug und dem mobilen Endgerät durch eine Datenkommunikationsverbindung jeweils in Verbindung steht, und
- eine elektronische Karte, die dazu ausgelegt ist abzurufen, ob ein Elektrokleinstfahrzeug an einer bestimmten durch das globales Navigationssatellitensystem ermittelten Position abgestellt werden darf.

Dabei ist das mobile Endgerät dazu eingerichtet, eine Beendigung des Entleihvorgangs des Elektrokleinstfahrzeugs nur dann zuzulassen, wenn das Elektrokleinstfahrzeug zum Einen anhand der elektronischen Karte an der durch das globale Navigationssatellitensystem ermittelten Position zum Zeitpunkt der Beendigung des Entleihvorgangs abgestellt werden darf und wenn sich das Elektrokleinstfahrzeug zum Anderen nicht im Überwachungsbereich der Sicherheitszonenüberwachungseinrichtung befindet.

Das Flottenmanagementsystem verwaltet eine Vielzahl von Elektrokleinstfahrzeugen im Geschäftsbereich des Betreibers. Die Nutzer entleihen sich dabei über ihr mobiles Endgerät ein Elektrokleinstfahrzeug, um dieses zu nutzen. Nach der Nutzung wird der Mietvorgang für das Elektrokleinstfahrzeug wieder über das mobile Endgerät des Nutzers beendet.

Für den Mietvorgang wird eine eindeutige Kennung eines Elektrokleinstfahrzeuges in das mobile Endgerät eingegeben, so dass über die Datenverarbeitungseinrichtung eine Zuordnung zwischen dem Endgerät und dem Elektrokleinstfahrzeug erfolgen kann. Für die Eingabe der Kennung des Elektrokleinstfahrzeuges kann beispielsweise eine eindeutige Identifikationsnummer händisch eingegeben werden, ein QR-Code oder ein Strich-Code am Elektrokleinstfahrzeug über eine Kamera des mobilen Endgeräts gescannt werden oder die Kennung von einem NFC-Chip oder einem RFID-Chip am Elektrokleinstfahrzeug durch das mobile Endgerät eingelesen werden.

Ein globales Navigationssatellitensystem (englisch global navigation satellite system) oder GNSS ist ein System zur Positionsbestimmung und Navigation auf der Erde und in der Luft durch den Empfang der Signale von Navigationssatelliten und Pseudoliten. GNSS ist dabei ein Sammelbegriff für die Verwendung globaler Satellitensysteme wie beispielsweise: NAVSTAR GPS (Global Positioning System), GLONASS (Globales Satellitennavigationssystem), Galileo, Beidou und verschiedener Ergänzungssysteme.

Eine Datenkommunikationsverbindung ermöglicht den Austausch von Daten zwischen den Kommunikationspartnern. Dabei kann die Datenkommunikation der Datenkommunikationsverbindung über das mobile Internet abgewickelt werden. Unter mobilem Internet wird die Möglichkeit verstanden, über verschiedene Datenfunk-Techniken auf mobilen Geräten, wie Elektrokleinstfahrzeugen, Sicherheitszonenüberwachungseinrichtungen, Smartphones, Laptops oder Tablet-PCs, Zugriff auf das Internet zu haben. Dabei können Datenverarbeitungseinrichtungen in Verbindung zum Internet stehen.

Der Überwachungsbereich der Sicherheitszonenüberwachungseinrichtung wird auch als Sicherheitszone bezeichnet.

Gemäß einer weiteren Ausführungsform der Erfindung ist vorgesehen, dass die Sicherheitszonenüberwachungseinrichtung durch eine direkte Datenkommunikationsverbindung in Verbindung mit der Datenverarbeitungseinrichtung steht und darüber der Datenverarbeitungseinrichtung mitteilt, ob sich das Elektrokleinstfahrzeug im Überwachungsbereich der Sicherheitszonenüberwachungseinrichtung befindet.

Gemäß einer weiteren Ausführungsform der Erfindung ist vorgesehen, dass das Elektrokleinstfahrzeug regelmäßig ein Lokalisierungssignal aussendet, das eine eindeutige Kennung des Elektrokleinstfahrzeuges enthält. Regelmäßig ist in diesem Zusammenhang alle 0,05 s bis 5 s, bevorzugt alle 0,1 s bis 0,5 s. Zum Aussenden des Lokalisierungssignals kann beispielsweise eine lokale Funktechnologie zum Einsatz kommen. Geeignete lokale Funktechnologien können hier beispielsweise Bluetooth oder WLAN sein.

Gemäß einer weiteren Ausführungsform der Erfindung ist vorgesehen, dass die Sicherheitszonenüberwachungseinrichtung einen oder mehrere Empfänger für eine lokale Funktechnologie wie beispielsweise Bluetooth oder WLAN aufweist. Dabei kann die Sicherheitszonenüberwachungseinrichtung mittels eines oder mehrerer der genannten Empfänger durch Auswertung des Lokalisierungssignals des Elektrokleinstfahrzeuges bestimmen, wie weit das Elektrokleinstfahrzeug entfernt ist. Indem für den oder die Empfänger bestimmte individuelle Entfernungswerte vorgegeben werden, kann daher bestimmt werden, ob sich das Elektrokleinstfahrzeug innerhalb oder außerhalb des Überwachungsbereichs der Sicherheitszonenüberwachungseinrichtung befindet. Dabei kann die Sicherheitszonenüberwachungseinrichtung die im Lokalisierungssignal enthaltene Kennung des Elektrokleinstfahrzeuges auslesen und mittels einer Datenkommunikationsverbindung der Datenverarbeitungseinrichtung mitteilen, wenn sich das Elektrokleinstfahrzeug im Überwachungsbereich der Sicherheitszonenüberwachungseinrichtung befindet. Gleichzeitig kann die Sicherheitszonenüberwachungseinrichtung die im Lokalisierungssignal enthaltene Kennung des Elektrokleinstfahrzeuges über die Datenkommunikationsverbindung der Datenverarbeitungseinrichtung mitteilen.

Gemäß einer alternativen Ausführungsform der Erfindung ist vorgesehen, dass die Sicherheitszonenüberwachungseinrichtung ein regelmäßiges Sicherheitszonensignal aussendet, das vom Elektrokleinstfahrzeug empfangen werden kann. Regelmäßig ist in diesem Zusammenhang alle 0,05 s bis 5 s, bevorzugt alle 0,1 s bis 0,5 s. Zum Aussenden des Sicherheitszonensignals kann beispielsweise eine lokale Funktechnologie zum Einsatz kommen. Geeignete lokale Funktechnologien können hier beispielsweise Bluetooth oder WLAN sein. Das Sicherheitszonensignal beinhaltet eine eindeutige Kennung der Sicherheitszone, die eine eindeutige Identifikation jeder Sicherheitszone erlaubt.

Gemäß einer weiteren Ausführungsform der Alternative der Erfindung ist vorgesehen, dass das Elektrokleinstfahrzeug über eine Empfangseinrichtung für das Sicherheitszonensignal verfügt. Dabei kann das Elektrokleinstfahrzeug mittels seiner genannten Empfangseinrichtung für das Sicherheitszonensignal durch Auswertung des Sicherheitszonensignals ermitteln, wie weit das Elektrokleinstfahrzeug vom Überwachungsbereich der Sicherheitszonenüberwachungseinrichtung entfernt ist. Indem für die Empfangseinrichtung für das Sicherheitszonensignal bestimmte individuelle Entfernungswerte vorgegeben werden, kann daher bestimmt werden, ob sich das Elektrokleinstfahrzeug innerhalb oder außerhalb des Überwachungsbereichs der Sicherheitszonenüberwachungseinrichtung befindet, also innerhalb oder außerhalb der Sicherheitszone ist. Dabei kann das Elektrokleinstfahrzeug durch Auslesen der individuellen Kennung der Sicherheitszone aus dem Sicherheitszonensignal und der Übermittlung der individuellen Kennung der Sicherheitszone an die Datenverarbeitungseinrichtung oder das Endgerät anzeigen, dass es sich innerhalb einer bestimmten Sicherheitszone befindet. Gleichzeitig kann das Elektrokleinstfahrzeug seine individuelle Kennung über die Datenkommunikationsverbindung der Datenverarbeitungseinrichtung mitteilen.

In einer speziellen Ausführungsform ist die Sicherheitszonenüberwachungseinrichtung dazu ausgebildet, das Elektrokleinstfahrzeug in mehreren, einander räumlich überlappenden Überwachungsbereichen zu detektieren.

Hierzu kann die Sicherheitszonenüberwachungseinrichtung oder das Elektrokleinstfahrzeug ausgebildet sein, eine Positionsbestimmung des Elektrokleinstfahrzeugs unter Anwendung einer Lateration oder einer Angulation auf Basis der einander räumlich überlappenden Überwachungsbereiche vorzunehmen. So ist eine hochgenaue Positionsbestimmung möglich, wenn beispielsweise die Sicherheitszonenüberwachungseinrichtung nicht nur einen einzigen Empfänger, sondern mehrere Empfänger für das von dem Elektrokleinstfahrzeug ausgesendete Lokalisierungssignal aufweist. Im Falle einer Lateration bilden die Empfänger eine räumlich verteilte Anordnung, mit der sich die verschiedenen Entfernungen bestimmen lassen, die das Elektrokleinstfahrzeug gegenüber den einzelnen Empfängern aufweist. Die Empfänger tauschen kontinuierlich Informationen über die gemessenen Entfernungen aus und ermöglichen so, die aktuelle Position des Elektrokleinstfahrzeugs noch präziser zu bestimmen. Im Falle einer Angulation werden nicht die Entfernungen, sondern die Winkel gemessen, die das Elektrokleinstfahrzeug gegenüber den Empfängern aufweist.

Eine Lateration oder Angulation lässt sich in entsprechender Weise implementieren, wenn die Sicherheitszonenüberwachungseinrichtung nicht nur einen einzigen, sondern mehrere Sender umfasst, die jeweils ein Sicherheitszonensignal oben beschriebener Art an das Elektrokleinstfahrzeug senden.

Vorzugsweise sind in den vorstehend genannten Konfigurationen jeweils mindestens drei Empfänger oder Sender vorgesehen, um eine hochgenaue Trilateration bzw. Triangulation zu ermöglichen.

Gemäß einer weiteren Ausführungsform der Erfindung ist vorgesehen, dass die elektronische Karte in der Datenverarbeitungseinrichtung, oder im Elektrokleinstfahrzeug oder im mobilen Endgerät abgelegt ist.

In einer Ausführungsform der Erfindung kann die elektronische Karte die Positionen der Sicherheitszonenüberwachungseinrichtungen und/oder die Positionen der Überwachungsbereiche bzw. Sicherheitszonen enthalten. Hierdurch ist es möglich die Bearbeitung der Anfragen zu beschleunigen, wenn viele Überwachungsbereiche bzw. Sicherheitszonenüberwachungseinrichtungen vorhanden sind und das Flottenmanagementsystem viele Elektrokleinstfahrzeuge verwaltet.

Gemäß einer weiteren Ausführungsform, die nicht Teil der beanspruchten Erfindung ist, ist vorgesehen, dass die Sicherheitszonenüberwachungseinrichtung am Eingang zu einem öffentlichen Gebäude angeordnet ist.

Gemäß einer weiteren Ausführungsform, die nicht Teil der beanspruchten Erfindung ist, ist vorgesehen, dass die Sicherheitszonenüberwachungseinrichtung am Zugang zu einer Verkehrsanlage angeordnet ist. Der Zugang kann hier beispielsweise über einen Eingang in einem Bahnhofs- oder Stationsgebäude erfolgen, aber auch über eine Treppe oder Rolltreppe die vom Straßenniveau nach oben (Hochbahnen) oder nach unten (U-Bahn oder S-Bahn Stationen) führt.

Gemäß einer weiteren Ausführungsform, die nicht Teil der beanspruchten Erfindung ist, ist vorgesehen, dass die Sicherheitszonenüberwachungseinrichtung im Bereich eines Fußgängerüberwegs über eine Straße oder im Bereich eines Fußgängerüberwegs über Straßenbahngleise oder im Bereich eines Fußgängerüberwegs über eine Bahnstrecke angeordnet ist. Insbesondere kann die Sicherheitszonenüberwachungseinrichtung an einem Mast für eine Lichtzeichenanlage angeordnet sein oder Bestandteil einer akustischen Zusatzeinrichtung für Lichtzeichenanlagen sein.

Gemäß einer weiteren Ausführungsform der Erfindung ist vorgesehen, dass ein Elektrokleinstfahrzeug ein Elektroroller, ein Segway, ein Hoverboard, ein Airwheel, ein E-Skateboard, ein E-Fahrrad oder eine E-Drohne ist.

Gemäß einer weiteren Ausführungsform der Erfindung ist vorgesehen, dass ein mobiles Endgerät ein Smartphone ist, dessen spezifische Funktionalität für den Einsatz im Zusammenhang mit dieser Erfindung in Form einer App codiert ist.

Die Erfindung wird im Folgenden anhand eines Ausführungsbeispiels unter Bezugnahme auf die Figuren beschrieben. Darin zeigen:
Figur 1 ein Blockdiagramm eines erfindungsgemäßen Flottenmanagementsystems nach einem Ausführungsbeispiel,
Figur 2 ein Blockdiagramm des Flottenmanagementsystems in einem abgewandelten Ausführungsbeispiel, und
Figur 3 eine schematische Darstellung eines Ausführungsbeispiels, in dem die Positionsbestimmung auf Grundlage einer Trilateration erfolgt.

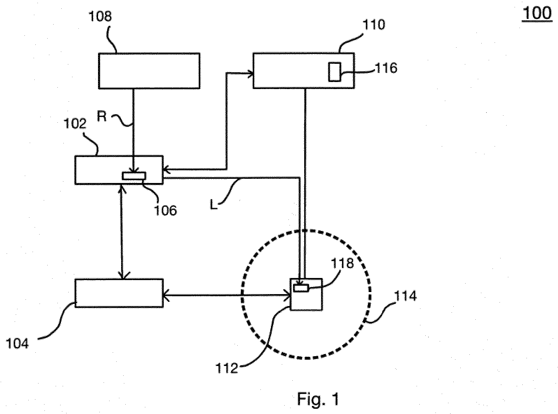

Figur 1 zeigt anhand eines Ausführungsbeispiels ein Flottenmanagementsystem 100, das dazu dient, einem Nutzer im Hinblick auf ein Elektrokleinstfahrzeug das Starten und Beenden eines Entleihvorgangs zu ermöglichen.

Das Flottenmanagementsystem 100 ist darauf ausgelegt, die Entleihvorgänge für eine Vielzahl von Elektrokleinstfahrzeugen 102 wie etwa Elektroroller zu steuern. Das Flottenmanagementsystem 100 sieht ein mobiles Endgerät 104 vor, mit dem der Nutzer den Entleihvorgang startet und beendet. Das Endgerät 104 ist beispielsweise ein Smartphone, auf dem eine Anwendungssoftware (App) installiert ist. In dieser Anwendungssoftware ist die Funktionalität codiert, die der Nutzer zur Steuerung des Entleihvorgangs benötigt.

Jedes Elektrokleinstfahrzeug 102 ist mit einem Empfänger 106 ausgestattet, der Signale eines globalen Navigationssatellitensystems 108 empfängt. So senden Satelliten des Navigationssatellitensystems 108 laufend ihre aktuelle Position und Uhrzeit als codierte Radiosignale R an den Empfänger 106. Das Elektrokleinstfahrzeug 102 berechnet die Entfernung zu den Satelliten, deren Signale es empfängt, und ermittelt daraus seine aktuelle Position.

Das Flottenmanagementsystem 100 umfasst ferner eine Datenverarbeitungseinrichtung 110, die sowohl mit dem Elektrokleinstfahrzeug 102 als auch mit dem mobilen Endgerät 104 kommuniziert. Als Datenverarbeitungseinrichtung 110 kommt beispielsweise ein Server zum Einsatz, der über das mobile Internet Datenkommunikationsverbindungen mit dem Elektrokleinstfahrzeug 102 und dem mobilen Endgerät 104 aufrechterhält.

In dem Flottenmanagementsystem 100 ist eine Sicherheitszonenüberwachungseinrichtung 112 enthalten, der ein Überwachungsbereich bzw. eine Sicherheitszone 114 zugeordnet ist. Die Sicherheitszonenüberwachungseinrichtung 112, die beispielsweise im Bereich einer Lichtzeichenanlage angeordnet ist, ermöglicht es, den Überwachungsbereich 114 daraufhin zu überwachen, ob sich das Elektrokleinstfahrzeug 102 innerhalb des Überwachungsbereichs 114 befindet oder nicht.

Um einen Mietvorgang zu starten, wird dem mobilen Endgerät 104 eine eindeutige Kennung des Elektrokleinstfahrzeugs 102 zugeführt, anhand der die Datenverarbeitungseinrichtung 110 eine Zuordnung zwischen dem mobilen Endgerät 104 und dem entliehenen Elektrokleinstfahrzeug 102 vornehmen kann. Diese eindeutige Kennung kann beispielsweise in Form einer Identifikationsnummer von Hand in das Endgerät 104 eingegeben werden. Sie kann auch in Form eines QR-Codes oder Strich-Codes, der sich an dem Elektrokleinstfahrzeug 102 befindet, über eine in dem Endgerät 104 enthaltene Kamera gescannt werden. Auch das Einlesen der Kennung über einen an dem Elektrokleinstfahrzeug 102 vorhandenen NFC-Chip oder RFID-Chip ist möglich.

Wie oben erwähnt, ist das Elektrokleinstfahrzeug 102 mit Hilfe seines Empfängers 106 imstande, unter Nutzung des globalen Navigationssatellitensystems 108 seine aktuelle Position zu bestimmen. Um festzustellen, ob das Elektrokleinstfahrzeug 102 an seiner aktuellen Position abgestellt werden darf, sieht das Flottenmanagementsystem 100 die Verwendung einer elektronischen Karte 116 vor. In der Ausführungsform nach Figur 1 ist die elektronische Karte 116 rein beispielhaft in der Datenverarbeitungseinrichtung 110 abgelegt. Sie kann allerdings ebenso in dem Elektrokleinstfahrzeug 102 oder in dem mobilen Endgerät 104 enthalten sein.

Die elektronische Karte 116 enthält eine Zuordnungsvorschrift beispielsweise in Form einer Tabelle, in der den satellitengestützt ermittelbaren Positionen jeweils eine Information zugeordnet ist, die angibt, ob das Elektrokleinstfahrzeug 102 an dieser Position abgestellt werden darf oder nicht. Soll der Entleihvorgang beendet und das Elektrokleinstfahrzeug 102 abgestellt werden, kann diese Information von dem mobilen Endgerät 104 abgerufen werden. Nur wenn anhand der elektronischen Karte 116 festgestellt wird, dass das Elektrokleinstfahrzeug 102 zum Zeitpunkt der Beendigung des Entleihvorgangs an der satellitengestützt ermittelten Position abgestellt werden darf, wird es dem Nutzer ermöglicht, den Entleihvorgang zu beenden. Darf das Elektrokleinstfahrzeug 102 an der aktuellen Position nicht abgestellt werden, so wird es dem Nutzer nicht erlaubt, den Entleihvorgang zu beenden. Der Nutzer muss sich dann eine andere Stelle suchen, an der das Abstellen des Elektrokleinstfahrzeugs 102 gemäß der in der elektronischen Karte 116 gespeicherten Zuordnungsvorschrift erlaubt ist, um den Entleihvorgang beenden zu dürfen.

Die satellitengestützte Positionsbestimmung anhand der elektronischen Karte 116 ist bei massentauglichen Geräten wie einem Elektrokleinstfahrzeug in der Regel nur mit einer Genauigkeit möglich, die keine kleingliedrige Überwachung erlaubt. Damit lassen sich sehbehinderte oder blinde Menschen allein durch diese Positionsbestimmung nicht zuverlässig davor schützen, in Gefahrenbereichen mit dem Elektrokleinstfahrzeug 102 zu kollidieren. Die vorliegende Erfindung sieht deshalb die Verwendung der Sicherheitszonenüberwachungseinrichtung 112 vor, die eine zusätzliche Positionsbestimmung mit höherer Präzision ermöglicht.

Die Sicherheitszonenüberwachungseinrichtung 112 kommuniziert über eine direkte Datenkommunikationsverbindung mit der Datenverarbeitungseinrichtung 110, um letzterer mitzuteilen, ob sich das Elektrokleinstfahrzeug 102 in dem Überwachungsbereich 114 der Sicherheitszonenüberwachungseinrichtung 112 befindet. In einer speziellen Ausführungsform ist das Elektrokleinstfahrzeug 102 ausgebildet, regelmäßig ein Lokalisierungssignal L auszusenden, das die Sicherheitszonenüberwachungseinrichtung 112 zur Lokalisierung des Elektrokleinstfahrzeugs 102 empfängt. Das Lokalisierungssignal L kann z.B. unter Einsatz lokaler Funktechnologie wie Bluetooth oder WLAN ausgesendet werden. Dementsprechend verfügt die Sicherheitszonenüberwachungseinrichtung 112 in dieser Ausführungsform über einen oder mehrere Funkempfänger 118 für das Lokalisierungssignal L. Die Sicherheitszonenüberwachungseinrichtung 112 ist ausgebildet, das empfangene Lokalisierungssignal L auszuwerten und so die Entfernung des Elektrokleinstfahrzeugs 102 zu bestimmen. Beispielsweise können für den Funkempfänger 118 individuelle Entfernungswerte vorgegeben werden, anhand derer sich bestimmen lässt, ob sich das Elektrokleinstfahrzeug 102 innerhalb oder außerhalb des Überwachungsbereichs 114 der Sicherheitszonenüberwachungseinrichtung 112 befindet.

Mit dem Lokalisierungssignal L kann die Kennung des Elektrokleinstfahrzeugs 102 an die Sicherheitszonenüberwachungseinrichtung 112 gesendet werden. Die Sicherheitszonenüberwachungseinrichtung 112 liest dann die in dem Lokalisierungssignal L enthaltene Kennung des Elektrokleinstfahrzeugs 102 aus und teilt der Datenverarbeitungseinrichtung 110 diese Kennung mit, wenn sich das Elektrokleinstfahrzeug 102 innerhalb des Überwachungsbereichs 114 befindet.

Beabsichtigt der Nutzer, das Elektrokleinstfahrzeug 102 an einer bestimmten Stelle abzustellen und mittels seines mobilen Endgerätes 104 den Entleihvorgang zu beenden, so ermittelt das Elektrokleinstfahrzeug 102 mit Hilfe seines Empfängers 106 zunächst unter Einsatz des globalen Navigationssatellitensystems 108 seine aktuelle Position. Anhand einer Abfrage der elektronischen Karte 116 wird zudem ermittelt, ob das Elektrokleinstfahrzeug 102 an dieser aktuellen Position abgestellt werden darf oder nicht. Ergibt diese Abfrage, dass das Elektrokleinstfahrzeug 102 an dieser satellitengestützt ermittelten Position nicht abgestellt werden darf, so wird diese Information dem mobilen Endgerät 104 mitgeteilt. Daraufhin setzt das Endgerät 104 den Nutzer davon in Kenntnis, dass eine Beendigung des Entleihvorgangs nicht zugelassen wird.

Ergibt demgegenüber die Abfrage der elektronischen Karte 116, dass das Elektrokleinstfahrzeug 102 an der satellitengestützt ermittelten Position abgestellt werden darf, so erfolgt in oben beschriebener Weise eine Prüfung, ob sich das Elektrokleinstfahrzeug 102 innerhalb des Überwachungsbereichs 114 befindet oder nicht. Ergibt diese Prüfung, dass das Elektrokleinstfahrzeug 102 innerhalb des Überwachungsbereichs 114 angeordnet ist, so wird diese Information dem mobilen Endgerät 104 mitgeteilt. Das Endgerät 104 teilt dann wiederum dem Nutzer mit, dass eine Beendigung des Entleihvorgangs nicht zugelassen wird. Wird hingegen festgestellt, dass sich das Elektrokleinstfahrzeug 102 nicht innerhalb des Überwachungsbereichs 114 befindet, so wird es dem Nutzer ermöglicht, den Entleihvorgang zu beenden und das Elektrokleinstfahrzeug 102 an der aktuellen Position abzustellen.

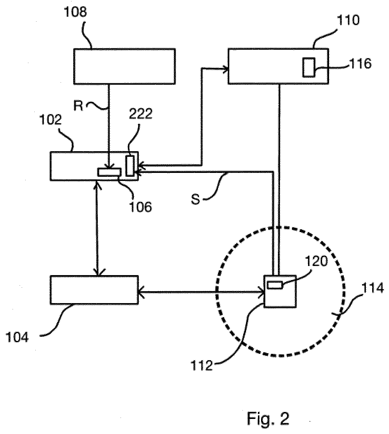

Figur 2 zeigt eine abgewandelte Ausführungsform, die sich von der Konfiguration nach Figur 1 im Hinblick darauf unterscheidet, wie die Entfernung des Elektrokleinstfahrzeug 102 von der Sicherheitszone 114 ermittelt wird.

Im Unterschied zur vorherigen Ausführungsform sendet die Sicherheitszonenüberwachungseinrichtung 112 in Figur 2 mittels eines entsprechenden Funksenders 120 ein regelmäßiges Sicherheitszonensignal S aus, das von einer in dem Elektrokleinstfahrzeug 102 enthaltenen Empfangseinrichtung 222 empfangen wird. Wie das Lokalisierungssignal S in Figur 1 kann auch das Sicherheitszonensignal S unter Einsatz lokaler Funktechnologie wie Bluetooth oder WLAN übertragen werden.

In der Ausführungsform nach Figur 2 wertet das Elektrokleinstfahrzeug 102 mit Hilfe der Empfangseinrichtung 222 das Sicherheitszonensignal S aus, um zu bestimmen, wie weit das Elektrokleinstfahrzeug 102 von der Sicherheitszone 114 entfernt ist. Für die Empfangseinrichtung 222 des Elektrokleinstfahrzeugs 102 können wiederum individuelle Entfernungswerte vorgegeben werden, anhand derer bestimmt wird, ob sich das Elektrokleinstfahrzeug 102 innerhalb oder außerhalb der Sicherheitszone 114 befindet.

Das Sicherheitszonensignal S kann eine Kennung des Überwachungsbereichs bzw. der Sicherheitszone 114 beinhalten, die eine eindeutige Identifikation der Sicherheitszone 114 ermöglicht. Indem das Elektrokleinstfahrzeug 102 diese individuelle Kennung aus dem Sicherheitszonensignal S ausliest und die Kennung an das mobile Endgerät 104 oder die Datenverarbeitungseinrichtung 110 sendet, kann das Elektrokleinstfahrzeug 102 anzeigen, dass es sich innerhalb der Sicherheitszone 114 befindet. Zugleich kann das Elektrokleinstfahrzeug 102 seine individuelle Kennung an die Datenverarbeitungseinrichtung 110 übertragen.

Die Prüfung, ob der Entleihvorgang an einer bestimmten Position beendet werden darf, erfolgt im Wesentlichen in gleicher Weise, wie dies weiter oben in Bezug auf Figur 1 erläutert ist.

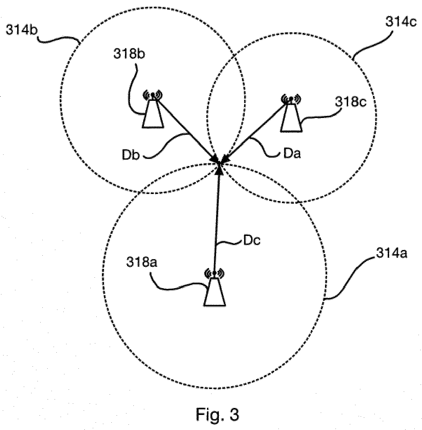

In Figur 3 ist ein weiteres Ausführungsbeispiel dargestellt, in dem noch zuverlässiger verhindert werden kann, dass ein Elektrokleinstfahrzeug an einer ungewünschten Position abgestellt wird.

Während in dem Ausführungsbeispielen nach Figur 1 die Sicherheitszonenüberwachungseinrichtung 112 mit dem Funkempfänger 118 nur einen einzigen Empfänger für das Lokalisierungssignal S hat, sieht das in Figur 3 gezeigte Ausführungsbeispiel die Verwendung von mehreren, vorzugsweise drei Funkempfängern 318a, 318b, 318c vor, denen jeweils ein eigener Überwachungsbereich 314a, 31b, 314c zugeordnet ist. Eine solche Konfiguration ist beispielsweise im Bereich einer Lichtzeichenanlage vorteilhaft einsetzbar, die auf verschiedenen Fahrbahnseiten mehrere Masten umfasst, an denen jeweils einer der Funkempfänger 314a, 414b, 314c angebracht ist. Diese Konfiguration ermöglicht es, die Entfernung des Elektrokleinstfahrzeugs (in Figur 3 nicht gezeigt) genauer zu messen als dies bei Nutzung nur eines einzigen Empfängers möglich ist. Hierzu kann ein als Trilateration bezeichnetes Messverfahren zur Positionsbestimmung eingesetzt werden.

Wie in Figur 3 veranschaulicht, werden bei diesem Messverfahren die Entfernungen Da, Db, Dc gemessen, die das Elektrokleinstfahrzeug von den jeweiligen Funkempfängern 318a, 318b bzw. 318c aufweist. Die Messungen der einzelnen Entfernungen Da, Db, Dc können dabei in einer Weise erfolgen, wie dies oben in Bezug auf Figur 1 erläutert ist. Beispielsweise kann die Entfernung über die Bluetooth-Signalstärke oder UWB gemessen werden. Um eine Trilateration zu ermöglichen, tauschen die Funkempfänger 318a, 318b, 318c beispielsweise über ein Funknetzwerk wie etwa Bluetooth-Mesh kontinuierlich Informationen über die gemessenen Entfernungen Da, Db, Dc aus. Alternativ ist auch eine kabelgebundene Kommunikation oder eine Kommunikation über Internet zwischen den Funkempfängern 312a, 312b, 312c möglich. Auf Basis der zwischen den Funkempfängern 318a, 318b, 318c ausgetauschten Entfernungsinformationen wird die Position des Elektrokleinstfahrzeugs ermittelt. Diese Position liegt in der Figur 3 im Schnittpunkt der drei gestrichelten Kreise, welche die Sicherheitszonen 314a, 314b, 314c darstellen.

In dem Beispiel nach Figur 3 erfolgt die Positionsbestimmung auf Basis der Entfernungen Da, Db, Dc, die das Elektrokleinstfahrzeug von den jeweiligen Funkempfängern 318a, 318b, 318c aufweist. Es ist jedoch ebenso möglich, zur Positionsbestimmung eine sogenannte Triangulation anzuwenden, bei der die Winkel gemessen werden, die das Elektrokleinstfahrzeug gegenüber den Funkempfängern 318a, 318b, 318c einnimmt. Die einzelnen Winkelmessungen können beispielsweise unter Einsatz lokaler Funktechnologie wie Bluetooth AoA (angle of arrival), UWB, Phasenverschiebung im RF-Signal etc. durchgeführt werden. Überdies kann sowohl bei der Lateration als auch der Angulation die über das globale Navigationssatellitensystem gewonnenen Positionsdaten in die Positionsbestimmung einfließen. Zudem kann die Bewegungsgeschwindigkeit berücksichtigt werden, die beispielsweise über in dem Elektrokleinstfahrzeug vorgesehene Beschleunigungssensoren ermittelt wird.

Die Konfiguration nach Figur 3 kann auch derart abgewandelt werden, dass die einzelnen Entfernungen Da, Db, Dc ensprechend dem in Figur 2 dargestellten Ausführungsbeispiel ermittelt werden. Anstelle der Funkempfänger 318a, 318b, 318c sind in einer solchen Konfiguration mehrere dem Funksender 120 entsprechende Sender vorgesehen.

### Bezugszeichenliste

- 100: Flottenmanagementsystem
- 102: Elektrokleinstfahrzeug
- 104: mobiles Endgerät
- 106: Empfänger
- 108: globales Navigationssatellitensystem
- 110: Datenverarbeitungseinrichtung
- 112: Sicherheitszonenüberwachungseinrichtung
- 114: Überwachungsbereich, Sicherheitszone
- 116: elektronische Karte
- 118: Funkempfänger
- 120: Funksender
- 222: Empfangseinrichtung
- 314a, 314b, 414: Überwachungsbereich, Sicherheitszone
- 318a, 3128, 318c: Funkempfänger
- Da, Db, Dc: Entfernung
- L: Lokalisierungssignal
- S: Sicherheitszonensignal

## Patentansprüche

1. Flottenmanagementsystem (100) zum Starten und Beenden von Entleihvorgängen, umfassend:
- ein Elektrokleinstfahrzeug (102), mit einem Empfänger (106) eines globalen Navigationssatellitensystems (108);
- ein mobiles Endgerät (104), das dazu eingerichtet ist, einen Entleihvorgang des Elektrokleinstfahrzeuges (102) zu starten und den Entleihvorgang des Elektrokleinstfahrzeuges (102) wieder zu beenden;
- mindestens eine Sicherheitszonenüberwachungseinrichtung (112), die dazu ausgelegt ist, im Zusammenwirken mit dem Elektrokleinstfahrzeug (102) eine Gegenwart des Elektrokleinstfahrzeuges (102) im Überwachungsbereich (114) der Sicherheitszonenüberwachungseinrichtung (112) zu detektieren;
- eine Datenverarbeitungseinrichtung (110), die mit dem Elektrokleinstfahrzeug (102) und dem mobilen Endgerät (104) durch eine Datenkommunikationsverbindung jeweils in Verbindung steht und
- eine elektronische Karte (116), die dazu ausgelegt ist abzurufen, ob ein Elektrokleinstfahrzeug (102) an einer bestimmten durch das globales Navigationssatellitensystem ermittelten Position abgestellt werden darf;
wobei das mobile Endgerät (104) dazu eingerichtet ist, eine Beendigung des Entleihvorgangs des Elektrokleinstfahrzeugs (102) nur dann zuzulassen, wenn das Elektrokleinstfahrzeug (102) zum Einen anhand der elektronischen Karte (116) an der durch das globale Navigationssatellitensystem ermittelten Position zum Zeitpunkt der Beendigung des Entleihvorgangs abgestellt werden darf und wenn sich das Elektrokleinstfahrzeug (102) zum Anderen nicht im Überwachungsbereich (114) der Sicherheitszonenüberwachungseinrichtung (112) befindet.

2. Flottenmanagementsystem (100) nach Anspruch 1, wobei die Sicherheitszonenüberwachungseinrichtung (112) durch eine Datenkommunikationsverbindung in Verbindung mit der Datenverarbeitungseinrichtung (110) steht und darüber der Datenverarbeitungseinrichtung (110) mitteilt, ob sich das Elektrokleinstfahrzeug (102) im Überwachungsbereich (114) der Sicherheitszonenüberwachungseinrichtung (112) befindet.

3. Flottenmanagementsystem (100) nach Anspruch 1 oder 2, wobei die Sicherheitszonenüberwachungseinrichtung (112) ein regelmäßiges Sicherheitszonensignal (S) aussendet, das vom Elektrokleinstfahrzeug (102) empfangen wird, wobei das Sicherheitszonensignal (S) eine eindeutige Kennung des Überwachungsbereichs (114) beinhaltet, die eine eindeutige Identifikation jedes Überwachungsbereichs (114) erlaubt.

4. Flottenmanagementsystem (100) nach Anspruch 3, wobei das Elektrokleinstfahrzeug (102) durch Auswertung des Sicherheitszonensignals (S) ermittelt, ob sich das Elektrokleinstfahrzeug (102) innerhalb oder außerhalb des Überwachungsbereichs (114) der Sicherheitszonenüberwachungseinrichtung (112) befindet.

5. Flottenmanagementsystem (100) nach Anspruch 1 oder 2, wobei das Elektrokleinstfahrzeug (102) ein regelmäßiges Lokalisierungssignal (S) aussendet, das von der Sicherheitszonenüberwachungseinrichtung (112) empfangen wird, wobei das Lokalisierungssignal (L) eine eindeutige Kennung des Elektrokleinstfahrzeug (102) beinhaltet, die eine eindeutige Identifikation des Elektrokleinstfahrzeugs (102) erlaubt.

6. Flottenmanagementsystem (100) nach Anspruch 5, wobei die Sicherheitszonenüberwachungseinrichtung (112) durch Auswertung des Lokalisierungssignals (S) ermittelt, ob sich das Elektrokleinstfahrzeug (102) innerhalb oder außerhalb des Überwachungsbereichs (114) der Sicherheitszonenüberwachungseinrichtung (112) befindet.

7. Flottenmanagementsystem (100) nach einem der vorangehenden Ansprüche, wobei die Sicherheitszonenüberwachungseinrichtung (112) ausgebildet ist, das Elektrokleinstfahrzeug (102) in mehreren, einander räumlich überlappenden Überwachungsbereichen (314a, 314b, 314c) zu detektieren.

8. Flottenmanagementsystem (100) nach Anspruch 7, wobei die Sicherheitszonenüberwachungseinrichtung (112) oder das Elektrokleinstfahrzeug (102) ausgebildet ist, eine Positionsbestimmung des Elektrokleinstfahrzeugs (102) unter Anwendung einer Lateration oder einer Angulation auf Basis der einander räumlich überlappenden Überwachungsbereiche (314a), 314b, 314c) vorzunehmen.

9. Flottenmanagementsystem (100) nach einem der vorangehenden Ansprüche, wobei die elektronische Karte (116) in der Datenverarbeitungseinrichtung (110) oder im Elektrokleinstfahrzeug (102) oder im mobilen Endgerät (104) abgelegt ist.

10. Flottenmanagementsystem (100) nach einem der vorangehenden Ansprüche, wobei die elektronische Karte (116) die Positionen der Sicherheitszonenüberwachungseinrichtungen (112) und/oder die Positionen der Überwachungsbereiche (114) enthält.

11. Flottenmanagementsystem (100) nach einem der vorangehenden Ansprüche, wobei das Elektrokleinstfahrzeug (102) ein Elektroroller, ein Segway, ein Hoverboard, ein Airwheel, ein E-Skateboard, ein E-Fahrrad oder eine E-Drohne ist.

12. Flottenmanagementsystem (100) nach einem der vorangehenden Ansprüche, wobei das mobile Endgerät (104) ein Smartphone ist.

## Claims

1. Fleet management system (100) for starting and ending borrowing processes, comprising:
- a personal light electric vehicle (102) having a receiver (106) of a global navigation satellite system (108);
- a mobile terminal (104) which is configured to start a borrowing process of the personal light electric vehicle (102) and to end the borrowing process of the personal light electric vehicle (102) again;
- at least one safety zone monitoring device (112) which is designed to detect, in conjunction with the personal light electric vehicle (102), the presence of the personal light electric vehicle (102) in the monitoring area (114) of the safety zone monitoring device (112);
- a data processing device (110) which is connected to the personal light electric vehicle (102) and the mobile terminal (104) by means of a data communication link, and
- an electronic map (116) which is designed to indicate whether a personal light electric vehicle (102) may be parked at a specific position determined by the global navigation satellite system;
wherein the mobile terminal (104) is configured to permit the end of the borrowing process of the personal light electric vehicle (102) only if, on the one hand, the personal light electric vehicle (102) may be parked using the electronic map (116) at the position determined by the global navigation satellite system at the time of the end of the borrowing process and, on the other hand, the personal light electric vehicle (102) is not located in the monitoring area (114) of the safety zone monitoring device (112).

2. Fleet management system (100) according to Claim 1, wherein the safety zone monitoring device (112) is connected to the data processing device (110) by means of a data communication link and the data processing device (110) communicates via said link whether the personal light electric vehicle (102) is located in the monitoring area (114) of the safety zone monitoring device (112).

3. Fleet management system (100) according to Claim 1 or 2, wherein the safety zone monitoring device (112) emits a regular safety zone signal (S) which is received by the personal light electric vehicle (102), wherein the safety zone signal (S) contains a unique identifier of the monitoring area (114) which allows a unique identification of each monitoring area (114).

4. Fleet management system (100) according to Claim 3, wherein the personal light electric vehicle (102) evaluates the safety zone signal (S) to determine whether the personal light electric vehicle (102) is inside or outside the monitoring area (114) of the safety zone monitoring device (112).

5. Fleet management system (100) according to Claim 1 or 2, wherein the personal light electric vehicle (102) emits a regular locating signal (S) which is received by the safety zone monitoring device (112), wherein the locating signal (L) contains a unique identifier of the personal light electric vehicle (102) which allows a unique identification of the personal light electric vehicle (102).

6. Fleet management system (100) according to Claim 5, wherein the safety zone monitoring device (112) evaluates the locating signal (S) to determine whether the personal light electric vehicle (102) is inside or outside the monitoring area (114) of the safety zone monitoring device (112).

7. Fleet management system (100) according to any one of the preceding claims, wherein the safety zone monitoring device (112) is designed to detect the personal light electric vehicle (102) in several, spatially overlapping monitoring areas (314a, 314b, 314c).

8. Fleet management system (100) according to Claim 7, wherein the safety zone monitoring device (112) or the personal light electric vehicle (102) is designed to determine the position of the personal light electric vehicle (102) using a lateration or an angulation on the basis of the spatially overlapping monitoring areas (314a, 314b, 314c).

9. Fleet management system (100) according to any one of the preceding claims, wherein the electronic map (116) is stored in the data processing device (110) or in the personal light electric vehicle (102) or in the mobile terminal (104).

10. Fleet management system (100) according to any one of the preceding claims, wherein the electronic map (116) contains the positions of the safety zone monitoring devices (112) and/or the positions of the monitoring areas (114).

11. Fleet management system (100) according to any one of the preceding claims, wherein the personal light electric vehicle (102) is an electric scooter, a segway, a hoverboard, an airwheel, an electric skateboard, an electric bike or an electric drone.

12. Fleet management system (100) according to any one of the preceding claims, wherein the mobile terminal (104) is a smartphone.

## Revendications

1. Système de gestion de flotte (100) pour le démarrage et l'arrêt de processus de location, comprenant :
- un véhicule électrique de petite taille (102), doté d'un récepteur (106) d'un système mondial de navigation par satellite (108) ;
- un terminal mobile (104) qui est conçu pour lancer un processus de location du véhicule électrique de petite taille (102) et pour arrêter à nouveau le processus de location du véhicule électrique de petite taille (102) ;
- au moins un dispositif de surveillance de zone de sécurité (112) qui est conçu pour détecter, en coopération avec le véhicule électrique de petite taille (102), une présence du véhicule électrique de petite taille (102) dans la zone de surveillance (114) du dispositif de surveillance de zone de sécurité (112) ;
- un dispositif de traitement de données (110) qui est en liaison avec le véhicule électrique de petite taille (102) et le terminal mobile (104) par une liaison de communication de données respective ; et
- une carte électronique (116) qui est conçue pour demander si un véhicule électrique de petite taille (102) peut être garé à une position spécifique déterminée par le système mondial de navigation par satellite ;
le terminal mobile (104) étant conçu pour n'autoriser un arrêt du processus de location du véhicule électrique de petite taille (102) que si, d'une part, il est permis de garer le véhicule électrique de petite taille (102) à la position déterminée par le système mondial de navigation par satellite au moment de l'arrêt du processus de location sur la base de la carte électronique (116), et **si,** d'autre part, le véhicule électrique de petite taille (102) ne se trouve pas dans la zone de surveillance (114) du dispositif de surveillance de zone de sécurité (112).

2. Système de gestion de flotte (100) selon la revendication 1, dans lequel le dispositif de surveillance de zone de sécurité (112) est en liaison avec le dispositif de traitement de données (110) par une liaison de communication de données et signale en outre au dispositif de traitement de données (110) si le véhicule électrique de petite taille (102) se trouve dans la zone de surveillance (114) du dispositif de surveillance de zone de sécurité (112).

3. Système de gestion de flotte (100) selon la revendication 1 ou 2, dans lequel le dispositif de surveillance de zone de sécurité (112) émet un signal de zone de sécurité régulier (S) qui est reçu par le véhicule électrique de petite taille (102), le signal de zone de sécurité (S) contenant un identifiant unique de la zone de surveillance (114) qui permet une identification unique de chaque zone de surveillance (114).

4. Système de gestion de flotte (100) selon la revendication 3, dans lequel le véhicule électrique de petite taille (102) détermine, par évaluation du signal de zone de sécurité (S), si le véhicule électrique de petite taille (102) se trouve à l'intérieur ou à l'extérieur de la zone de surveillance (114) du dispositif de surveillance de zone de sécurité (112).

5. Système de gestion de flotte (100) selon la revendication 1 ou 2, dans lequel le véhicule électrique de petite taille (102) émet un signal de localisation régulier (S) qui est reçu par le dispositif de surveillance de zone de sécurité (112), le signal de localisation (L) contenant un identifiant unique du véhicule électrique de petite taille (102) qui permet une identification unique du véhicule électrique de petite taille (102).

6. Système de gestion de flotte (100) selon la revendication 5, dans lequel le dispositif de surveillance de zone de sécurité (112) détermine, par évaluation du signal de localisation (L), si le véhicule électrique de petite taille (102) se trouve à l'intérieur ou à l'extérieur de la zone de surveillance (114) du dispositif de surveillance de zone de sécurité (112).

7. Système de gestion de flotte (100) selon l'une quelconque des revendications précédentes, dans lequel le dispositif de surveillance de zone de sécurité (112) est conçu pour détecter le véhicule électrique de petite taille (102) dans plusieurs zones de surveillance (314a, 314b, 314c) se chevauchant spatialement.

8. Système de gestion de flotte (100) selon la revendication 7, dans lequel le dispositif de surveillance de zone de sécurité (112) ou le véhicule électrique de petite taille (102) est conçu pour effectuer une détermination de position du véhicule électrique de petite taille (102) en appliquant une trilatération ou une triangulation sur la base des zones de surveillance (314a, 314b, 314c) se chevauchant spatialement.

9. Système de gestion de flotte (100) selon l'une quelconque des revendications précédentes, dans lequel la carte électronique (116) est stockée dans le dispositif de traitement de données (110) ou dans le véhicule électrique de petite taille (102) ou dans le terminal mobile (104).

10. Système de gestion de flotte (100) selon l'une quelconque des revendications précédentes, dans lequel la carte électronique (116) contient les positions des dispositifs de surveillance de zone de sécurité (112) et/ou les positions des zones de surveillance (114).

11. Système de gestion de flotte (100) selon l'une quelconque des revendications précédentes, dans lequel le véhicule électrique de petite taille (102) est une trottinette électrique, un Segway, un hoverboard, un airwheel, un planche à roulettes électrique, un vélo électrique ou un drone électrique.

12. Système de gestion de flotte (100) selon l'une quelconque des revendications précédentes, dans lequel le terminal mobile (104) est un smartphone.
